# EUROPÄISCHE PATENTANMELDUNG

(11) **EP 1 800 900 A1**
(43) Veröffentlichungstag der Anmeldung: **27.06.2007**
(21) Anmeldenummer: 06123135.3
(22) Anmeldetag: 30.10.2006
(51) Int. Cl.: B60C 1/00, C08K 7/02, C08L 21/00, D07B 1/06

(54) **Verwendung auxetischer Materialien in Kautschukprodukten, Kautschukmischungen und Cordmaterialien**

(30) Priorität: 16.12.2005 DE 102005060293
(71) Anmelder: Continental Aktiengesellschaft, 30165 Hannover (DE)
(72) Erfinder: Carl, Wilfried, 12159, Berlin (DE); Haufe, Matthias, 30451, Hannover (DE); Dombrowski, Alexander, 30163, Hannover (DE)

(57) **Zusammenfassung**

Zur Verringerung des Abriebs und Verbesserung der Rissbeständigkeit bei technischen Kautschukprodukten werden auxetische Materialien verwendet, die als Cordmaterialien und/oder als Kautschukmischungsbestandteile eingebracht werden können. Bei den Kautschukprodukten handelt es sich um beliebige elastomere Artikel, insbesondere Bänder, Gurte, Dichtungen, Profile, Fahrzeugreifen bzw. Teile davon wie Laufstreifen, Karkassen oder auch technische Membrane. Neben den Kautschukprodukten umfasst die Erfindung das auxetische Cordmaterial und Kautschukmischungen mit auxetischen Mischungsbestandteilen.

## Beschreibung

Die Erfindung betrifft die Verwendung auxetischer Materialien in Kautschukprodukten, insbesondere in Gurten, Bändern und Fahrzeugreifen, sowie auxetische Materialien enthaltende Cordmaterialien und Kautschukmischungen.

Kautschukprodukte, die unter mechanischer Beanspruchung stehen, wie z.B. Fahrzeugreifen, insbesondere Fahrzeugluftreifen, technische Gurte, Bänder und Membranen, müssen gleichzeitig verschiedenen äußeren Kräften standhalten und dabei gute Gebrauchseigenschaften zeigen. Gerade bei Produkten, die im Freien verwendet werden, kommt noch hinzu, dass die Kautschukprodukte ihre guten Gebrauchseigenschaften unter verschiedenen Umwelt- und Wetterbedingungen (Hitze, Nässe, Eis) beibehalten sollen.

Speziell bei Fahrzeugreifen besteht unter anderem das Problem, dass der Abriebwiderstand von Laufflächenmischungen mit deren Härte zunimmt, wobei andererseits die Rissanfälligkeit deutlich erhöht wird. Durch diesen Zielkonflikt kann eine Steigerung der Laufleistung nur durch Einbußen der Laufflächenhaltbarkeit erreicht werden. Weiterhin führt z.B. eine Erhöhung des Rußgehaltes neben der Steigerung der Härte zu starkem Wärmeaufbau im Betrieb sowie extrem hohen Viskositäten, die eine Verarbeitung unmöglich machen.

Die Aufgabe der Erfindung besteht daher darin, bei technischen Kautschukprodukten den Abrieb zu verringern und gleichzeitig die Rissbeständigkeit zu erhöhen.

Erfindungsgemäß wird die Aufgabe dadurch gelöst, dass in den gattungsgemäßen Kautschukprodukten, d.h. allgemein elastomeren Artikeln aller Art, vorzugsweise Bändern, Gurten, Dichtungen, Profilen, Laufstreifen, Fahrzeugreifen, wenigstens ein auxetisches Material anwesend ist.

Der Abrieb entsteht bei Fahrzeugreifen durch den Kontakt zu dem Untergrund (Fahrbahn), bei technischen Gurten und Bändern durch den Kontakt zu Maschinenteilen.

Im Rahmen der Erfindung wurde gefunden, dass durch die Verwendung auxetischer Materialen die Reaktion technischer Kautschukprodukte auf äußere Kräfte bei starker mechanischer Beanspruchung optimiert werden kann. Durch die auxetischen Materialien lässt sich in den oben genannten Kontaktflächen ein deutlich höherer lokaler Druck als mit Standard-Elastomeren erzeugen. Dies führt zu vermindertem Schlupf. Der Abriebwiderstand und die Rissbeständigkeit werden deutlich verbessert.

Die seit einigen Jahren bekannte Klasse auxetischer Materialien zeichnet sich im Wesentlichen durch eine negative Poisson-Zahl aus, d.h. unter Dehnung wird ein Streifenprüfkörper breiter, unter Druck wird die Nachgiebigkeit herabgesetzt. Es existieren natürliche auxetische Materialien, wie z.B. Kork, und synthetische Materialien, denen diese Eigenschaft bei Ihrer Herstellung oder auch nachträglich durch ein Behandlungsverfahren verliehen wird.

Die Poisson-Zahl ist definiert als das Verhältnis von seitlicher, d.h.lateraler oder quergerichteter Kontraktion zur longitudinalen oder längsgerichteten Ausdehnung unter Zug in Längsrichtung. Eine negative Poisson-Zahl bedeutet daher, dass das Material sich unter Zug in Längsrichtung verdickt. Die Poisson-Zahl lässt sich auch mit Hilfe anderer bekannter Kennzahlen formelmäßig darstellen. Für isotrope Materialien gilt nach "F.A. McLinock and A. S. Argon in "Mech. Behav. Matter" (Addison-Wesley, 1966, S. 79)":

| | |
|---|---|
| Young's Modul E | E = 9KG / (3K + G) |
| Scher Modul G | G = E / 2 (1 + ν) |
| Bulk Modul K | K = E / 3(1 - 2 ν) |
| Poisson-Zahl ν | ν = 1/2 {(3K - 2G)/(3K + G)} |

"Anwesenheit" des auxetischen Materials kann bedeuten, dass sich das Material gemäß einer Ausführungsform der Erfindung in dem Kautschukprodukt innerhalb einer oder auch mehrerer verschiedener darin verwendeter Kautschukmischungen befindet.

Unter einem Kautschukprodukt wird hier ein Produkt verstanden, das aus einem kautschukbasierten Material besteht oder dieses zu wesentlichen Teilen enthält. Das kautschukbasierte Material ist ein nach Vulkanisieren gummi-elastisches, d.h. elastomeres Produkt oder ein thermoplastisches Elastomer. Dabei enthält der nicht-vulkansierte Kautschuk bzw. die nicht-vulkanisierte Kautschukmischung einen Natur- oder Synthesekautschuk oder eine Mischung aus verschiedenen Kautschuken. Die vulkanisierbaren Kautschukmischungen enthalten weiterhin Füllstoffe und Additive sowie wenigstens ein Vulkanisatiosmittel im weiteren Sinne, d.h., außer Schwefel sind auch Schwefelspender oder andere für den Kautschuk geeignete Vernetzer möglich. Füllstoffe können generell eingemischt oder eingebunden werden, wie dem Fachmann prinzipiell bekannt.

Für einen Fahrzeugreifen beispielsweise werden in der Regel mehrere verschiedene Kautschukmischungen verwendet, die in unterschiedlichen räumlichen Bereichen des Reifens zum Einsatz kommen. Bei der Laufstreifenmischung, d.h. der Mischung, die für den Laufstreifen des Reifens eingesetzt wird, sind der Abrieb und der mechanische Griff von besonderer Bedeutung.

In einer bevorzugten Ausführungsform der Erfindung ist daher das auxetische Material bei einem Reifen in wenigstens einem der Reifenbauteile vorhanden, vorzugsweise im Laufstreifen. Der Einsatz in anderen Reifenbauteilen, vorzugsweise zusätzlich zum Laufstreifen, kann sinnvoll sein, um die Festigkeit und Haltbarkeit des Reifens insgesamt zu erhöhen. In Weiterbildung der Erfindung kann das auxetische Material daher optional auch in der Karkasse vorhanden sein.

Gemäß einer speziellen Ausführungsform der Erfindung kann "Anwesenheit" des auxetischen Materials bedeuten, dass das auxetische Material - vorzugsweise ein polymeres auxetisches Material, weiter vorzugsweise aus der Kautschukgruppe, oder ein auxetischer Füllstoff - als Mischungsbestandteil in der Kautschukmischung vorliegen kann. Die erzielbare Poisson-Zahl verhält sich dabei in erster Näherung entsprechend der Mischungsregel, so dass bei einem auxetischen Mischungsbestandteil, beispielsweise einem Füllstoff, mit einer Poisson-Zahl von minus 0,5 ab 50 Vol.-% ein auxetisches Verhalten der gesamten Mischung resultiert.

Gemäß einem weiteren Ausführungsbeispiel der Erfindung kann das auxetische Material als Bestandteil innerhalb des Produkts, beispielsweise in Form von auxetischen CordSträngen vorhanden sein, wobei die Cord-Stränge vorzugsweise in eine Kautschukmischung eingebettet sein können.

Unter Cord versteht man Einlagen z.B. in Gummigurten, Förderbändern, Gürtelreifen in Form von Seil- oder Faserkonstruktionen vielfältiger Geometrie. Häufig bestehen die Cord-Stränge nicht aus Einzelfasern oder -strängen, sondern aus gezwirnten bzw. in spezieller Geometrie bebündelten und verdrillten Einzelsträngen, die zu einem Cordstrang zusammengeführt wurden. Auxetische Corde kann man beispielsweise durch geeignete Kombination (z.B. Verzwirnen) nicht-auxetischer Filamente hoher Steifigkeit (z.B. Stahl oder Aramid) mit solchen niedriger Steifigkeit (z.B. Nylon) erhalten.

Alternativ können die auxetischen Cordstränge aus einem in sich auxetischen Material (z.B. einem durch seine Herstellung auxetischen Polymer) oder aus einem durch geeignete Behandlung auxetisch gemachten Material bestehen, insbesondere polymerem Material, Carbonfasern, anderen anorganischen Fasermaterialien oder Composites mit diesen. Die Behandlung kann in einem im Wesentlichen thermo-mechanischen Verfahren bestehen, wie beispielsweise in US 6,878,320 oder "Journal of Materials Science 32 (1997) 5945 - 5953" offenbart.

Für Reifencord eignen sich in Abwandlung von Stahlcord auch zu Cordsträngen verarbeitete Kombinationen aus steifen Stahlfilamenten und weniger steifen Filamenten (z.B. aus polymeren Materialien wie z.B. Nylon), denen i.a. durch Verzwirnen der Fasern ihre Auxetizität verliehen wird. In weiteren Ausführungsformen können rein polymere Cordmaterialien verwendet werden, wie z.B. auxetische Aramid-Nylon-Fasern (z.B. beschrieben in Technical Textiles, Sept. 2005, 29-33 und von Hook, Evans, Hartmann-Thompson und Bunce in W02004/0088015). Eine weitere Verstärkungsmöglichkeit für die Kautschukprodukte besteht im Einlegen von auxetischen Kohlenstofffasern in die oder wenigstens in eine der Kautschukmischungen.

Gemäß einer weiteren Ausführungsform der Erfindung können dem einen oder wenigstens einem der Kautschuke durch besondere Behandlung des nicht-vulkanisierten Kautschuks oder durch besondere Behandlung während des Vulkanisierens auxetische Eigenschaften verliehen worden sein. Für das auxetisch Machen polymerer Materialien stehen dem Fachmann verschiedene Verfahren zur Verfügung. Die US 6,878,320 offenbart die Herstellung auxetischer Filamente aus polymeren Materialien in einem speziellen Spinnprozess. Auch Chan und Evans offenbaren in "Journal of Materials Science 32 (1997) 5945 - 5953"verschiedene Verfahren für die Herstellung auxetischer Materialien, die bei der Erfindung verwendet werden können. Diese Verfahren können auch auf Kautschuke, insbesondere auch auf Naturkautschuk (NK/NR), Butadienkautschuk (BK/BR), (Poly)isoprenkautschuk (IK/IR), (Poly)chloroprenkautschuk (CK/CR) und/oder Styrol-Butadien-Kautschuk (SBK/SBR) angewendet werden.

In Weiterbildung der Erfindung kann ein Mischungsbestandteil innerhalb wenigstens einer der Kautschukmischungen in dem Kautschukprodukt ein auxetischer Füllstoff sein. Geeignete Füllstoffe sind z.B. auxetische zelluläre Festkörper (z.B. auxetische Schäume wie von Chan und Evans beschrieben in J. Mat. Sci., 32, 1197, 5945-5953), auxetische mikroporöse Polymere (z.B. geeignet behandeltes Polypropylen wie von Pickles, Alderson, Evans beschrieben in Polym. Eng. Sci, 36, 1996, 643), auxetische Composite (wie z.B. von Clarke et al. In Composites 25, 1994, 863 oder von Evans und Alderson in Adv. Mat. 12, 2000,623 beschrieben), molekular-auxetische Materialien (wie z.B. (1,4)-Refexyne, beschrieben von Evans et. al. in Nature, 353, 1991, 124) oder auxetische Fasern (wie z.B. beschrieben in Technical Textiles, September 2005, 29-33 oder auch dargelegt von Alderson und Simkins in US 6.878.320, oder sonstige künstliche oder natürliche auxetische Stoffe (wie z.B. Kork). Der auxetische Füllstoff kann mit Hilfe eines auxetische Eigenschaften verleihenden Verfahrens erhalten worden sein.

Gemäß einer weiteren Ausführungsform der Erfindung kann ein nicht-sphärischer Füllstoff, beispielsweise eines der bekannten Schichtsilikate, mit im Stande der Technik an sich bekannten Kopplungsmitteln an wenigstens einen der für das Kautschukprodukt vorgesehenen Kautschuke angebunden werden (beschrieben z.B. von Görl et. al. in Kautsch. Gummi Kunstst., 50, 1997, 881 u. 51, 1998, 525 u. 52, 1999, 493) und der so modifizierte Kautschuk kann dann mit den oben genannten Behandlungsmethoden in ein auxetisches Material überführt werden.

Die Erfindung betrifft weiter ein Cordmaterial für die Herstellung von Gurten, Bändern oder Fahrzeugreifen, welches auxetische Cordstränge, wie vorstehend beschrieben, enthält oder aus diesen gebildet ist.

Außerdem beinhaltet die Erfindung eine Kautschukmischung für die Herstellung der in dieser Anmeldung beschriebenen Kautschukprodukte, wobei die Kautschukmischung wenigstens einen auxetischen Mischungsbestandteil enthält.

Der Mischungsbestandteil kann gemäß einer Ausführungsform der Erfindung ein Natur- oder Synthesekautschuk oder eine Mischung aus verschiedenen Kautschuk-Polymeren sein, und kann mit Hilfe eines auxetische Eigenschaften verleihenden Verfahrens - wie oben näher beschrieben - aus dem entsprechenden Grundkautschuk erhalten worden sein.

Alternativ kann die Kautschukmischung als einen Mischungsbestandteil einen auxetischen Füllstoff enthalten. Dieser kann an einen Kautschuk der Mischung mit an sich bekannten Kopplungsreagenzien angebunden sein.

Schließlich umfasst die Erfindung die Verwendung auxetischer Materialien, insbesondere faserförmiger auxetischer Materialien, in Kautschukprodukten, vorzugsweise in kautschukbasierten Gurten, Bändern, insbesondere Förderbändern, Schläuchen, Membranen und Reifenteilen, insbesondere Laufstreifen und/oder Karkassen. Bevorzugt ist dabei, dass das auxetische Material innerhalb einer Kautschukmischung vorhanden ist. In alternativer Ausführungsform kann das auxetische Material als ein Cordmaterial enthalten sein.

Im Folgenden werden bestimmte Aspekte der Erfindung anhand von Abbildungen näher erläutert. Es zeigen:
- Abb.1: schematische Darstellung eines Laufstreifen-Prüfkörpers mit zugehörigem Kontraktions/Expansionsverhalten;
- Abb. 2: schematische Darstellung eines polymergebundenen nicht-sphärischen Füllstoffs;
- Abb. 3: Vergleich der Normaldruckverteilung in der Kontaktfläche eines typischen Lkw-Luftreifens für Poisson-Zahlen von 0.49 und -0.8 in der Lauffläche (hier gekennzeichnet durch "LS") bei konstanten Bedingungen und Eigenschaften aller übrigen Reifenbauteile.

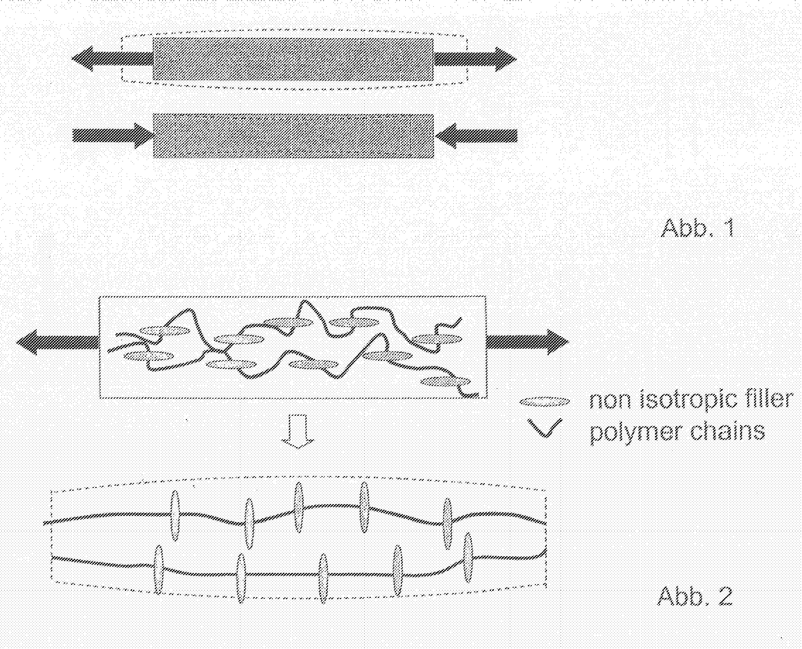

Abbildung 1 zeigt in schematischer Darstellung einen Prüfkörper aus auxetischem Material in Form eines Streifens, z.B. einen Laufstreifenprüfkörper, und allgemein dessen zugehöriges Expansionsverhalten unter Zug in Längsrichtung (obere Darstellung) bzw. unter Kompression (untere Darstellung).

In Abbildung 2 ist dargestellt, wie dieses ungewöhnliche Verhalten im Falle eines Kautschukprodukts beispielsweise erzielt werden kann: ein nicht isotroper oder ein nicht-sphärischer Füllstoff (dargestellt durch Ellipsen) ist in eine Polymerkette eingebunden. Um den energetisch günstigsten Zustand einzunehmen oder durch geeignete Behandlung (wie z.B. Extrusion) werden sich die Füllstoff-Moleküle innerhalb des ungeordneten Polymers etwa parallel ausrichten. Bei Anwendung von Zug in Längsrichtung zum Streifen und damit auch zur Vorzugsrichtung der langgestreckten Polymerketten werden die angebundenen Füllstoffmoleküle zwangsweise aufgerichtet (auch bei statistischer Einbindungsausrichtung in genügender Anzahl quer zum Polymer), so dass sich der Werkstoff quer zur Zugrichtung ausweitet - es zeigt sich ein definitionsgemäß negatives Poisson-Verhältnis.

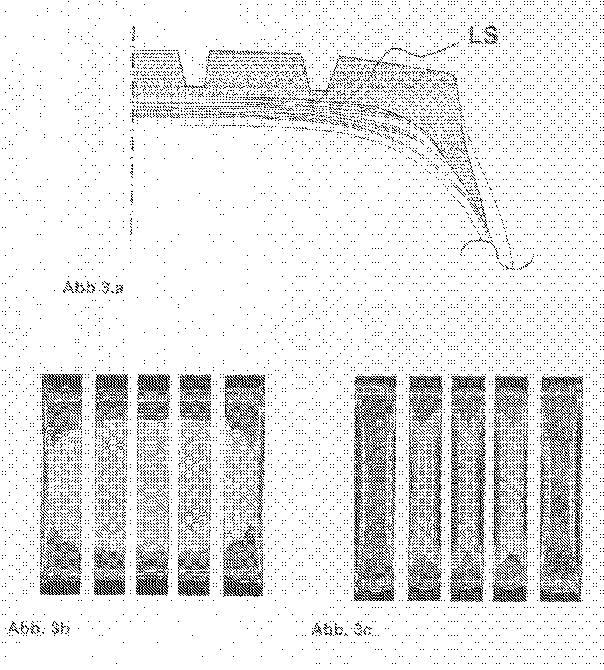

Abbildung 3 zeigt Ergebnisse zu verschiedenen Poisson-Zahlen in graphischer Darstellung.

Abbildung 3a zeigt den Querschnitt des Kopfbereiches eines typischen Lkw-Luftreifens mit Festigkeitsträgern (Gürtellagen und Karkasse) und elastomeren Bauteilen. Mit "LS" besonders gekennzeichnet ist der Laufstreifenbereich. Durch eine Variation der Poisson-Zahl in diesem Laufstreifen (bei Konstanz aller sonstigen Bedingungen, der Bauteilgeometrien u. Eigenschaften) werden die in Abb. 3b und Abb. 3c gezeigten Normaldruckverteilungen in der Bodenaufstandsfläche erzielt. Eine veränderte Normaldruckverteilung hat bei gleicher Tangentialspannung und gleichem Reibbeiwert eine veränderte Reibenergieverteilung und somit einen veränderten Reifenabrieb zur Folge. So kann z.B. durch geeignete Kombination von auxetischen Laufflächenmischungen mit einem konventionellen Unterbau ein deutlich verbesserter Abriebwiderstand erzeugt werden. Abb. 3c zeigt das Verhalten für ein auxetisches Laufstreifenmaterial mit einer Poisson-Zahl der Laufstreifenmischung von -0,8 im Vergleich zu der in Abb. 3b gezeigten Verhältnissen bei einer gängigen Laufstreifenmischung mit einer Poisson-Zahl von +0,49 (typischer Wert für Kautschukvulkanisate).

## Patentansprüche

1. Kautschukprodukt, **gekennzeichnet durch** die Anwesenheit wenigstens eines auxetischen Materials.

2. Kautschukprodukt nach Anspruch 1, **dadurch gekennzeichnet, dass** es sich bei dem Produkt um ein Band, einen Gurt, eine Dichtung, eine Membran, ein Profil, ein Reifenbauteil oder einen Fahrzeugreifen handelt.

3. Kautschukprodukt nach Anspruch 2, **dadurch gekennzeichnet, dass** das auxetische Material bei einem Reifen in wenigstens einem der Reifenbauteile vorhanden ist, vorzugsweise im Laufstreifen.

4. Kautschukprodukt nach einem der Ansprüche 1 bis 3, **dadurch gekennzeichnet, dass** es auxetische Cordstränge enthält.

5. Kauschukprodukt nach Anspruch 4, **dadurch gekennzeichnet, dass** die Cordstränge aus einem in sich auxetischen Material oder aus einem durch eine Behandlung auxetisch gemachten Material bestehen, insbesondere polymerem Material, Carbonfasern, anderen anorganischen Fasermaterialien oder Composites mit diesen.

6. Kautschukprodukt nach einem der Ansprüche 1 bis 5, **dadurch gekennzeichnet, dass** es wenigstens eine Kautschukmischung enthält, die ihrerseits wenigstens einen auxetischen Mischungsbestandteil enthält.

7. Kautschukprodukt nach Anspruch 6, **dadurch gekennzeichnet, dass** der auxetische Mischungsbestandteil oder wenigstens einer der auxetischen Mischungsbestandteile ein Kautschuk ist.

8. Kautschukprodukt nach Anspruch 7, **dadurch gekennzeichnet, dass** der auxetische Kautschuk ein mit Hilfe eines auxetische Eigenschaften verleihenden Verfahrens erhaltener Kautschuk ist.

9. Kautschukprodukt nach Anspruch 6, **dadurch gekennzeichnet, dass** der auxetische Mischungsbestandteil oder wenigstens einer der auxetischen Mischungsbestandteile ein Füllstoff ist.

10. Kautschukprodukt nach Anspruch 9, **dadurch gekennzeichnet, dass** der auxetische Füllstoff ein mit Hilfe eines auxetische Eigenschaften verleihenden Verfahrens erhaltener Füllstoff ist.

11. Kautschukprodukt nach Anspruch 9 oder 10, **dadurch gekennzeichnet, dass** der auxetische Füllstoff auxetische Kohlenstofffasern enthält oder aus diesen besteht.

12. Cordmaterial für die Herstellung von Gurten, Bändern oder Fahrzeugreifen, **dadurch gekennzeichnet, dass** es auxetische Cordstränge enthält oder aus diesen gebildet ist.

13. Kautschukmischung für die Herstellung von Kautschukprodukten nach einem der Ansprüche 1 bis 11, **dadurch gekennzeichnet, dass** die Kautschukmischung wenigstens einen auxetischen Mischungsbestandteil enthält.

14. Kautschukmischung nach Anspruch 13, **dadurch gekennzeichnet, dass** der Mischungsbestandteil ein Natur- oder Synthesekautschuk ist, der vorzugsweise mit Hilfe eines auxetische Eigenschaften verleihenden Verfahrens aus dem entsprechenden Grundkautschuk erhalten wurde.

15. Kautschukmischung nach Anspruch 13, **dadurch gekennzeichnet, dass** an wenigstens einen Kautschuk ein Füllstoff angebunden ist, und dass diese Verbindung mittels eines auxetische Eigenschaften verleihenden Verfahrens behandelt wurde.

16. Kautschukmischung nach Anspruch 13, **dadurch gekennzeichnet, dass** der Mischungsbestandteil ein auxetischer Füllstoff ist.

17. Kautschukmischung nach Anspruch 16, **dadurch gekennzeichnet, dass** der auxetische Füllstoff auxetische Kohlenstofffasern enthält oder aus diesen besteht.

18. Verwendung faserförmiger auxetischer Materialien in Kautschukprodukten, vorzugsweise in kautschukbasierten Gurten, Bändern, Schläuchen, Dichtungen, Profilen, Membranen und Reifenteilen.

19. Verwendung nach Anspruch 18, **dadurch gekennzeichnet, dass** das auxetische Material innerhalb einer Kautschukmischung vorhanden ist.

20. Verwendung nach Anspruch 18 oder 19, **dadurch gekennzeichnet, dass** das auxetische Material als ein Cordmaterial enthalten ist.
